# EUROPÄISCHE PATENTSCHRIFT

(11) **EP 1 361 148 B1**
(45) Veröffentlichungstag und Bekanntmachung des Hinweises auf die Patenterteilung: **07.09.2005**
(21) Anmeldenummer: 03007732.5
(22) Anmeldetag: 04.04.2003
(51) Int. Cl.: B62K 21/16

(54) **Sportfahrrad mit umsteckbarem Lenker**
Bicycle with changeable handlebar
Bicyclette avec guidon changeable

(30) Priorität: 07.05.2002 DE 20207158 U
(43) Veröffentlichungstag der Anmeldung: 12.11.2003
(73) Patentinhaber: Pürschel, Evelyn, 90453 Nürnberg (DE); Lütkemüller, Hannelore, 38518 Gifhorn (DE)
(72) Erfinder: Lütkemüller, Harald, 38518 Gifhorn (DE); Pürschel, Bernd, 90453 Nürnberg (DE)
(74) Vertreter: Blaumeier, Jörg

(56) Entgegenhaltungen:
- DE-A- 19 905 130
- DE-C- 822 346
- DE-U- 29 822 038
- US-A- 5 154 094
- US-A- 5 211 074

## Beschreibung

Die Erfindung bezieht sich auf ein stationäres Trainingsrad, mit einem auf das vordere Stützrohr des Rahmens aufsteckbaren Lenker, insbesondere Triathlon-Lenker, mit einem höhenverstellbar feststellbarem Trägerrohr und mit nach vorne gerichteten, durch einen U-Bügel verbundenen Griffschenkeln.

Ein derartiges, beispielsweise im Gebrauchsmuster 298 22 038.5 beschriebenes Sportgerät ist durch den speziellen Triathlon-Lenker mit der Möglichkeit eines Auflegens der Unterarme für eine sportliche Körperhaltung ausgelegt, bei der der Oberkörper des Benutzers weit nach vorne in eine nahezu waagrechte Lage geneigt ist. Diese Lage ermöglicht zwar ein optimales Tretverhalten und die maximale Kraftübertragung, doch sollen solche Sportgeräte, insbesondere wenn sie als stationäre Trainingsgeräte in Fitnesscentern betrieben werden, auch für sportlich weniger trainierte Personen, insbesondere auch ältere Personen oder Personen mit Rückenbeschwerden, als Trainingsgerät zur Verfügung stehen. In diesem Fall ist die sportliche Sitzposition aber meist körperlich zu belastend, sodass die stationären Trainingsfahrräder (Indoor Cycles) von diesen Benutzergruppen meist nicht zum Training verwendet werden können.

Aus der US 5 154 094 ist bereits ein Triathlon-Lenker für ein Sportfahrrad bekannt geworden, bei dem es möglich ist den Lenkervorbau aus der im Wesentlichen waagrechten Fahrstellung in eine steiler gestellte Position nach oben zu schwenken. Dies würde aber bei einem stationären Trainingsfahrrad keine andere Sitzposition des Benutzers ermöglichen, da dieser in einer praktisch senkrechten Sitzhaltung, wenn überhaupt, den Lenker nur mit extrem ausgestreckten Armen erreichen könnte.

Der Erfindung liegt daher die Aufgabe zugrunde, ein Trainingsrad der eingangs genannten Art so auszugestalten, dass durch einfache Umrüstung eine bequemere, mehr aufrechte Betriebsposition erreichbar ist.

Zur Lösung dieser Aufgabe ist ein Trainingsrad der eingangs genannten Art erfindungsgemäß gekennzeichnet durch einen Umsteckmodul mit einem in das Stützrohr einsteckbaren Zwischenträgerrohr, auf dem eine Klemmhalterung für das Trägerrohr des Lenkers derart angeordnet ist, dass eine steil nach oben gerichtete Position der Grittschenkel erzielt wird, wobei die Klemmhalterung bevorzugt als Aufnahmehülse ausgebildet sein kann.

Durch den erfindungsgemäßen sehr einfach aufgebauten Umsteckmodul, bestehend lediglich aus einem Zwischenträgerrohr, der gleichen Form wie das Trägerrohr des im Folgenden als bevorzugtes Ausführungsbeispiel stets angesprochenen Triathlon-Lenkers, und einer darauf querliegend aufgebrachten, beispielsweise aufgeschweißten, Aufnahmehülse, lässt sich die gewünschte Umrüstung in eine bequemere Fahrradposition speziell für ältere Sportler mit einem Handgriff durchführen. Man öffnet die Verklemmung für die Höhenverstellung des Triathlon-Lenkers, steckt den erfindungsgemäßen Modul ein und steckt dann das Trägerrohr des Triathlon-Lenkers in die leicht gegenüber der horizontalen, geneigt angeordneten Aufnahmehülse des Umsteckmoduls.

Diese Aufnahmehülse des Umsteckmoduls soll in Ausgestaltung der Erfindung eine Klemmfeststellschraube zur vorzugsweise stufenlosen Verschiebung des Zwischenträgerrohrs aufweisen, sodass auf diese Art und Weise die Entfernung des Lenkers vom Sitz des Sportgeräts individuell eingestellt werden kann.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Seitenansicht des oberen Teils eines erfindungsgemäßen stationären Trainingsrads in der Rennposition des Lenkers,
- Fig. 2: eine Seitenansicht, bei der durch einen Umsteckmodul eine aufrechtere Körperhaltung beim Fahren gegeben ist und

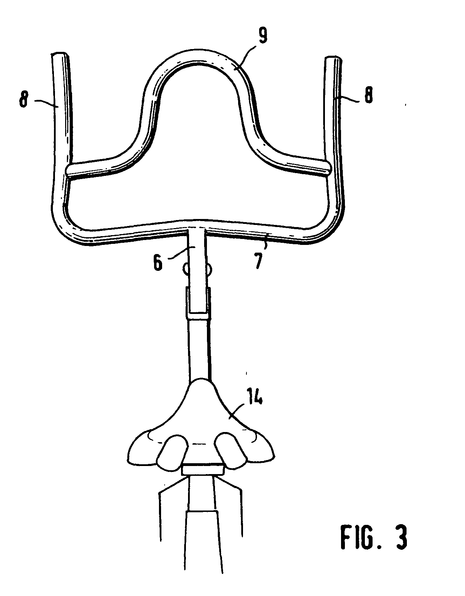

- Fig. 3: eine Ansicht des Oberteils des Trainingsrads von rückwärts.

Das in den Figuren gezeigte erfindungsgemäße Trainingsrad 1 besteht aus einem Rahmen 2, an dem eine Schwungscheibe drehbar gehaltert ist, das über einen nicht näher beschriebenen Pedalantrieb antreibbar ist, der als direkter Antrieb ohne Freilauf ausgebildet sein kann. Das Trainingsrad kann darüber hinaus eine Bremseinrichtung umfassen, die jedoch an dieser Stelle im Einzelnen nicht beschrieben zu werden braucht, da sie nicht Gegenstand der vorliegenden Erfindung ist. Auf das vordere Stützrohr 3 des Rahmens 2 ist ein Triathlon-Lenker 4 aufsteckbar, bestehend aus einem höhenverstellbar mithilfe einer Feststellschraube 5 verstellbaren Trägerrohr 6 einer daran befestigten Querstange 7, die an beiden Enden nach vorne gerichtete Griffschenkel 8 trägt, die durch einen U-Bügel 9 verbunden sind, der die Griffposition bei auf den Griffschenkeln aufliegenden Unterarmen des Fahrers bildet (Triathlon-Lenker). Die Griffschenkel 8 sind etwa in der Mitte leicht nach oben abgeknickt. Diese Positionsausbildung eines Triathlon-Lenkers für ein Trainingsrad ist bekannt.

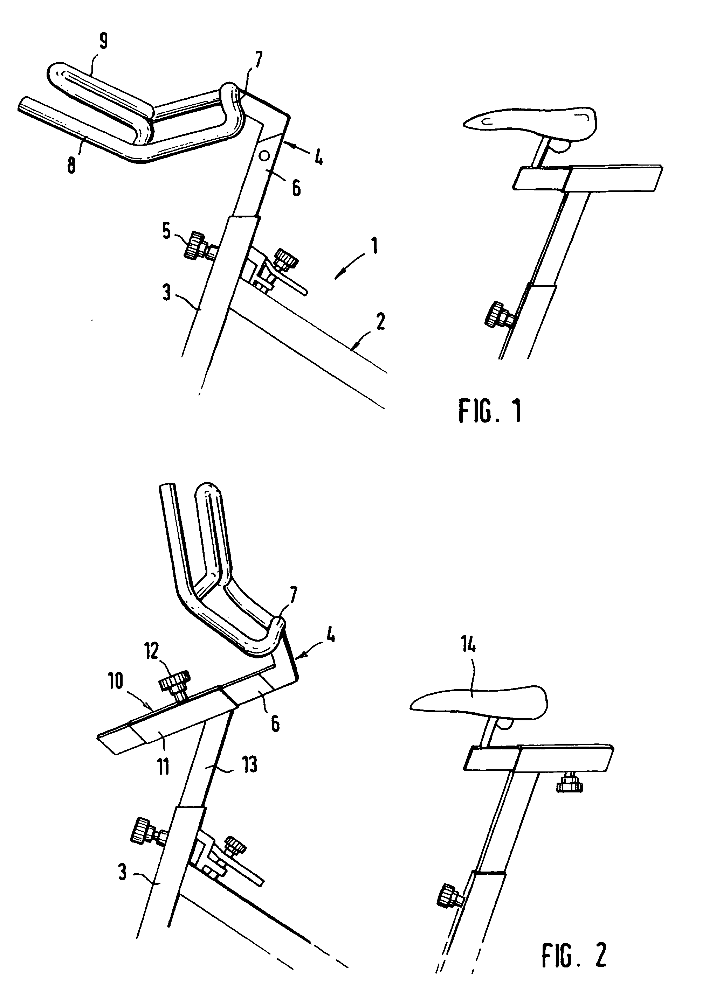

Um eine aufrechtere Fahrposition insbesondere für ältere Sportler zu ermöglichen, ist erfindungsgemäß ein Umsteckmodul 10 vorgesehen, wie er in Fig. 2 eingebaut ist. Dieser Umsteckmodul 10 besteht aus einer Aufnahmehülse 11 mit Feststellschraube 12 zur Aufnahme des Trägerrohrs 6 des Triathlon-Lenkers 4 sowie einem Zwischenträgerrohr 13, an dem die Aufnahmehülse vorzugsweise angeschweißt ist und zwar in einer Querposition derart, dass beim Einstecken des Trägerrohrs 6 die Griffschenkel des Lenkers eine, in Fig. 2 erkennbare, steil nach oben gerichtete Position einnehmen. Dies ermöglicht eine im Wesentlichen aufrechte Sitzposition des Fahrers im Gegensatz zur sportlichen Sitzposition, die die Stellung des Lenkers gemäß Fig. 1 erfordert.

Zum Umstecken von der Sportfahrposition nach Fig. 1 in die bequemere Hobbysportlerstellung nach Fig. 2 wird einfach die Feststellschraube 5 gelöst, der Lenker 4 aus dem vorderen Stützrohr 3 herausgezogen und nach Einstecken und Feststellen des Umsteckmoduls 10 der Lenker mit seinem Trägerrohr 6 wieder in die Aufnahmehülse 11 des Umsteckmoduls 10 eingesteckt und mithilfe der Feststellschraube 12 in der gewünschten Abstandsposition gegenüber dem Sattel 14 fixiert.

Die Erfindung ist nicht auf das dargestellte Ausführungsbeispiel beschränkt. So wäre es nicht unbedingt notwendig, dass der Lenker 4 ein Triathlon-Lenker ist, sondern er könnte auch ein anderer Sportradlenker sein, bei dem durch Verwendung des erfindungsgemäßen Umsteckmoduls eine Veränderung der Position der Griffschenkel 8 von einer sportlicheren Fahrposition in eine bequemere aufrechtere Fahrposition möglich ist.

## Patentansprüche

1. Stationäres Trainingsrad (1), mit einem auf das vordere Stützrohr (3) des Rahmens aufsteckbaren Lenker (4), insbesondere Triathlon-Lenker, mit einem höhenverstellbar feststellbarem Trägerrohr (6) und mit nach vorne gerichteten, durch einen U-Bügel verbundenen Griffschenkeln (8), **gekennzeichnet durch** ein Umsteckmodul (10) mit einem in das Stützrohr (3) einsteckbaren Zwischenträgerrohr (13), auf dem eine Klemmhalterung für das Trägerrohr (6) des Lenkers (4) derart angeordnet ist, dass eine steil nach oben gerichtete Position der Griffschenkel erzielt wird.

2. Stationäres Trainingsrad nach Anspruch 1, **dadurch gekennzeichnet, dass** die Klemmhalterung eine Aufnahmehülse (11) ist.

3. Stationäres Trainingsrad nach Anspruch 2, **dadurch gekennzeichnet, dass** die Aufnahmehülse (11) eine Klemmfeststellschraube (12) zur vorzugsweise stufenlosen Verschiebung des Trägerrohrs (6) des Lenkers (4) aufweist.

## Claims

1. Stationary exercise bicycle, having a steering mountable on the front support tube of the frame, in particular a triathlon steering, having a height-adjustable, fixable carrying tube and forward-oriented handlebars connected by a U-shaped bow, **characterised by** an adjustment unit (10) with an intermediate carrying tube (13) which is insertable into the support tube (3) and on which - in order to achieve a steep upwardly oriented position of the handlebars (8) - a clamping mount for the carrying tube (6) of the steering (4) is disposed transversely, there preferably being the option of forming the clamping mount as a receiving sleeve.

2. Stationary exercise bicycle according to claim 1, **characterised in that** the clamping mount is a receiving sleeve (11).

3. Stationary exercise bicycle according to claim 2, **characterised in that** the receiving sleeve (11) has a clamping fixing screw (12) for the preferably infinitely variable displacement of the carrying tube (6) of the steering (4).

## Revendications

1. Cycle d'entraînement fixe, du type comportant une direction pouvant être enfoncée sur le tube d'appui avant du cadre, en particulier une direction du type « Triathlon », un tube porteur réglable pouvant être immobilisé en hauteur et un guidon orienté vers l'avant relié par un étrier en U, **caractérisé par** un module d'enfoncement (10) comportant un tube porteur intermédiaire (13), pouvant être enfoncé dans le tube d'appui (3), sur lequel est montée transversalement une pièce de verrouillage de tube porteur (6) de la direction (4), en vue d'obtenir un positionnement rigide orienté vers le haut du guidon (8), la pièce de verrouillage pouvant de préférence consister en une douille de réception.

2. Cycle d'entraînement fixe selon la revendication 1, **caractérisé en ce que** la pièce de verrouillage est constituée par une douille de réception.

3. Cycle d'entraînement fixe selon la revendication 2, **caractérisé en ce que** la douille de réception (11) présente une vis de verrouillage (12), destinée à permettre le coulissement, de préférence continu, du tube porteur (6) de la direction (4).
